# EUROPÄISCHE PATENTSCHRIFT

(11) **EP 0 576 951 B1**
(45) Veröffentlichungstag und Bekanntmachung des Hinweises auf die Patenterteilung: **06.05.1998**
(21) Anmeldenummer: 93109874.3
(22) Anmeldetag: 21.06.1993
(51) Int. Cl.: C08K 3/22, C08L 77/00

(54) **Schwerentflammbare Polyamidformmassen**
Flame retardant polyamide moulding compositions
Masses à mouler à base de polyamides difficilement inflammable

(30) Priorität: 03.07.1992 DE 4221925
(43) Veröffentlichungstag der Anmeldung: 05.01.1994
(73) Patentinhaber: BAYER AG, 51368 Leverkusen (DE)
(72) Erfinder: El Sayed, Aziz, Dr., D-51375 Leverkusen (DE); Ostlinning, Edgar, Dr., D-40237 Düsseldorf (DE); Idel, Karsten-Josef, Dr., D-47802 Krefeld (DE); Freitag, Dieter, Dr., D-47802 Krefeld (DE)

(56) Entgegenhaltungen:
- EP-A- 0 335 165
- EP-A- 0 400 428
- EP-A- 0 413 233

## Beschreibung

Die Erfindung betrifft eine durch Magnesiumhydroxid flammfest eingestellte, leichtverarbeitbare, Polyamidformmasse mit sehr guten mechanischen und elektrischen Eigenschaften sowie hoher Oberflächengüte.

Polyamide sind hochwertige Thermoplaste und zeichnen sich besonders aus durch:
- leichte Verarbeitbarkeit
- sehr gute mechanische Eigenschaften
- sehr gute elektrische Eigenschaften
- hohe Wärmeformbeständigkeit
- gute Chemikalienbeständigkeit
- sehr gute Oberflächenqualität.

Die Eigenschaften der bewährten Polyamide lassen sich durch Verstärkung mit Glasfasern, Glaskugeln, mineralischen Füllstoffen oder Mischungen aus diesen merklich erweitern. Elastomermodifizierung verbessert die Schlagzähigkeit der verstärkten Polyamide. Durch die Vielzahl der Kombinationsmöglichkeiten werden immer neue maßgeschneiderte Produkte für spezielle Einsatzgebiete entwickelt. Durch den Einsatz von mineralischen Füllstoffen und/oder Glasfasern wird jedoch die Oberflächengüte negativ beeinflußt.

Auch im Elektrobereich haben sich die Polyamide seit langem bewährt. Für dieses Einsatzgebiet werden hauptsächlich brandgeschützte Polyamide verwendet.

Folgende Brandschutzmittel sind bekannt und werden seit langem in Polyamiden eingesetzt
**1) Roter Phosphor** (z.B. DE-A-3 713 746 (≙ US-4 877 823) und EP-A 299 444 (≙ US-5 081 222)) wird hauptsächlich in glasfaserverstärktem PA 66 und 6/6T angeboten. Wegen der rotbraunen Eigenfarbe des Phosphors und seines pigmentartigen Charakters können solche Compounds nur in dunklen Farben geliefert werden. Außerdem neigen sie bei der Einwirkung von Feuchtigkeit und Wärme zur Bildung von Phosphin und Phosphaten (durch Disproportionierung des Phosphors). Phosphin ist toxikologisch problematisch und korrodiert zudem die kupferhaltigen Kontakte in elektrischen Installationen und Anlagen. Phosphate bilden leitfähige Beläge zwischen den oben erwähnten Kontakten. Durch geeignete Stabilisatoren kann die Disproportionierungsreaktion des Phosphors verzögert, jedoch nicht vollständig unterbunden werden.
**2) Organische Halogenverbindungen**
   Bromierte Diphenyle oder Diphenylether in Kombination mit Antimontrioxid wurden lange Zeit eingesetzt. Zunehmend werden folgende Halogenverbindungen verwendet:
   - Chlorierte cycloaliphatische Kohlenwasserstoffe (Dechlorane® plus von Occidental Chemical Co)
   - Bromierte Styrol-Oligomere (DE-A 2703419)
   - Kernbromierte Polystyrole ( PYRO-CHEK® 68 von FERRO Chemicals)

   Als Synergist werden heute Zinksalze oder Eisenoxide eingesetzt. Die meisten Flammschutzmittel auf Halogenbasis fangen an sich bei den Verarbeitungstemperaturen von Polyamiden zu zersetzen. Dabei bilden sich korrodierend wirkende Gase. Als Folge werden die elektrischen Kontakte zerstört. Außerdem werden die elektrischen Eigenschaften der Polyamide durch die ionogenen Spaltprodukte beeinträchtigt.
   Für die Herstellung von Teilen in hellen Farben werden diese Nachteile im Kauf genommen.
**3) Stickstoffverbindungen**
   Melaminsalze haben sich als Flammschutzmittel nur für unverstärkte Polyamide bewährt. Solche Produkte haben eine helle Eigenfarbe und besitzen gute elektrische Eigenschaften. Nachteilig ist die relativ niedrige Zersetzungstemperatur von Melaminsalzen.
**4) Magnesiumhydroxid**
   Magnesiumhydroxid ist als Flammschutzmittel für Polyolefine und Elastomere bekannt. Es hat gegenüber dem bisher verwendeten Aluminiumhydroxid den Vorteil der höheren Wasserabspaltungstemperatur (>340°C). Den Einsatz von Magnesiumhydroxid in Polyamiden ist in der Literatur beschrieben. Eine Menge von über 55 % ist allerdings erforderlich, um bei 1,6 mm Dicke die Bewertung V0 nach der Prüfnorm UL 94 für die Flammfestigkeit zu erreichen. Die Verarbeitbarkeit solcher Produkte ist problematisch. Die Zähigkeit fällt insbesondere bei PA 66 auf ein tieferes Niveau. Außerdem wird die Oberflächenqualität merklich verschlechtert. In EP-A-0 335 165 (= US-4 963 610) wird zu Polyamid 0,1 bis 20 Gew.-% eines funktionalisierten Olefinhomo- oder Copolymeren und 3 bis 30 Gew.-% einer Verstärkungsfaser zugegeben, um mit 40 bis 70 Gew.-% speziellen Magnesiumhydroxid-Sorten (spez. Oberfläche weniger als 18 m²/g) flammmhemmende Compounds herzustellen. Mit anderem Magnesiumhydroxid und ohne olefinische Additive wird die Bewertung V0 bei 1,6 mm Dicke nach UL 94 danach nicht erzielt. Durch die Kopplung der speziellen Polyolefine an Polyamid und die hohen Füllgerade lassen sich solche Compounds nicht leicht verarbeiten.

Der Erfindung liegt die Aufgabe zugrunde, Phosphor (rot) und halogenfreie, aber leicht verarbeitbare Polyamidformmassen und Formteile hieraus ohne die genannten Nachteile des Stands der Technik, mit der Klassifizierung V0 bei 1,6 mm nach UL 94 herzustellen, die außerdem gute mechanische Eigenschaften und gute Oberflächen aufweisen.

Es wurde nun gefunden , daß durch die Kombination von
- von 5 bis 30 Gew.-%: eines thermoplastischen Polyamides, ausgewählt aus PA6, PA66, PA46, PA610 oder teilkristalline Copolyamide bzw. Mischungen auf Basis dieser Komponenten,
- von 10 bis 30 Gew.-%: eines thermoplastischen teilaromatischen Copolyamides,
- von 0 bis 25 Gew.-%: Verstärkungsstoffen,
- von 40 bis 60 Gew.-%: Magnesiumhydroxid,
- von 0 bis 2,0 Gew.-%: Additiven, wie Gleitmittel, Stabilisatoren, und Nukleierungsmitteln,
die genannten Eigenschaften erreicht werden.

Gegenstand der Erfindung sind schwerentflammbare Polyamidformmassen aus
A) von 5 bis 30Gew.-%, bevorzugt von 10 bis 25Gew.-% eines thermoplastischen, teilkristallinen Polyamides,
B) von 10 bis 30 Gew.-%, bevorzugt von 15 bis 28 Gew.-% eines thermoplastischen, teilkristallinen, teilaromatischen Copolyamides,
C) von 40 bis 60 Gew.-% Magnesiumhydroxid,
D) von 0 bis 25 Gew.-%, bevorzugt von 5 bis 33 Gew.-% Verstärkungsstoffe,
E) von 0 bis 2 Gew.-% Verarbeitungsadditive,
die Verwendung der Polyamidformmassen zur Herstellung von Formkörpern sowie Formkörper aus den erfindungsgemäßen Formmassen.

Die Herstellung der erfindungsgemäßen Massen erfolgt auf handelsüblichen Einwellen- oder Zweiwellen-Extrudern bzw. Knetern. Die Dosierung des Magnesiumhydroxids erfolgt im Granulattrichter und/oder durch eine Seitenschnecke in die Polyamidschmelze. Die Zugabe der Verstärkungsstoffe D) (z.B. Glasfasern) erfolgt nach dem Stand der Technik in die Glasfaseröffnung kurz vor der Düse. Die Massetemperatur richtet sich nach den verwendeten Polyamiden und liegt zwischen 220 und 340°C.

Als teilaromatisches Copolyamid B) der erfindungsgemässen Formmassen eignen sich bevorzugt Copolyamide aus Isophtnalsäure- und/oder Terephthalsäure-Hexamethylendiamin und Caprolactam

Als Verstärkungsstoffe D) für die erfindungsgemäßen Formmassen werden handelsübliche Glasfasern und/oder Kohlefasern und/oder Mineralfasern, gegebenenfalls mit Oberflächenbehandlung für Polyamide, bevorzugt Glasfasem, verwendet.

Als Magnesiumhydroxid C) gemäß dieser Erfindung wird handelsübliches Magnesiumhydroxid mit oder ohne Oberflächen-Behandlung verwendet Durch die Behandlung der Oberflächen des Magnesiumhydroxids mit Aminosilanen werden die mechanischen Eigenschaften deutlich verbessert. Feinteilige (Durchmesser: 0,4-10 µ) Mg-Hydroxide können gemäß dieser Erfindung bevorzugt verwendet werden.

Die Verarbeitungsadditive E) bestehen aus handelsüblichen Gleitmitteln, Thermostabilisatoren und/oder Nukleierungsmitteln.

### Beispiele 1 - 10

Die Einsatzstoffe wurden vorgemischt und bei 290°C Massetemperatur über einen Zweiwellenschneckenkneter extrudiert und anschließend granuliert. Das erhaltene Granulat wurde bei 70°C im Vakuumtrockenschrank 4 h getrocknet und anschließend auf einer Arburg Spritzgießmaschine bei einer Massetemperatur von 290°C zu Prüfkörpern verspritzt.

Die mechanischen und elektrischen Eigenschaften, das Brandverhalten nach UL 94 und die Oberflächengüte wurden bestimmt (s. Tabellen 1 und 2).

**Tabelle 1**

| Versuch | 1 Vergleich | 2 Vergleich | 3 | 4 | 5 |
|---|---|---|---|---|---|
| Polyamid 6 | 45,4 % | 40,2 % | 19,2 % | 17,0 % | 16,9 % |
| Copolyamid aus 85 Gew.-% Polyamid 6 und 15 Gew.-% Polyamid 6,I | 0,0 % | 0,0 % | 26,2 % | 23,2 % | 22,9 % |
| Mg(OH)₂ | 54,5 % | 51,7 % | 54,5 % | 51,7 % | 45,1 % |
| Glasfasern | 0,0 % | 8,0 % | 0,0 % | 8,0 % | 15,0 % |
| Amidwachs | 0,1 % | 0,1 % | 0,1 % | 0,1 % | 0,1% |
| Izod a_{n [kJ/m²]} | 23 | 25 | 25 | 25 | 26 |
| Oberflächengüte | + | -- | +++ | ++ | ++ |
| Brandschutzklasse nach der Prüfnorm UL 94 bei | | | | | |
| 3,2 mm | V0 | V0 | V0 | V0 | V0 |
| 1,6 mm | V 2 | V 0 | V 0 | V 0 | V 0 |
| 0,8 mm | V 2 | V 2 | V 2 | V 2 | V 0 |
| Glühdrahtfestigkeit [°C] | 960 | 960 | 960 | 960 | 960 |
| Kriechstromfestigkeit (nach IEC 112 bzw. VDO 303 T1) | > 600 | > 600 | > 600 | > 600 | > 600 |

| Versuch | 6 Vergleich | 7 Vergleich | 8 | 9 | 10 |
|---|---|---|---|---|---|
| Polyamid 66 | 45,4 % | 40,2 % | 19,2 % | 17,0 % | 16.9 % |
| Copolyamid aus 85 Gew.-% Polyamid 6 und 15 Gew.-% Polyamid 6,I | 0,0 % | 0,0 % | 26,2 % | 23,2 % | 22,9 % |
| Mg(OH)₂ | 54,5 % | 51,7 % | 54,5 % | 51,7 % | 45,1 % |
| Glasfasem | 0,0 % | 8,0 % | 0,0 % | 8,0 % | 15,0 % |
| Amidwachs | 0,1 % | 0,1 % | 0,1 % | 0,1 % | 0,1 % |
| Izod a_{n [kJ/m²]} | 16 | 19 | 23 | 26 | 27 |
| Oberflächengüte | -- | -- | +++ | ++ | ++ |
| Brandschutzklasse nach der PrüfnormUL 94 bei | | | | | |
| 3,2 mm | V 0 | V 0 | V 0 | V 0 | V 0 |
| 1,6 mm | V 2 | V 0 | V 0 | V 0 | V 0 |
| 0,8 mm | V 2 | V 2 | V 2 | V 2 | V 0 |
| Glühdrahtfestigkeit [°C] | 960 | 960 | 960 | 960 | 960 |
| Kriechstromfestigkeit (nach IEC 112 und VDO 303 T1) | > 600 | > 600 | > 600 | > 600 | > 600 |
| Die Oberflächengüte wurde wie folgt charakterisiert: -- ungenügend (fleckig, rauh, etc.) - mangelhaft + ausreichend ++ gut +++ hervorragend (glatt, fleckenlos) | | | | | |

Ein Vergleich zwischen Probekörpern aus Formmassen nach dem Stand der Technik und erfindungsgemäßen besonderen Mischungen (Beispiele 1 mit 3, 2 mit 4, 6 mit 8 und 7 mit 9) zeigt, daß die Oberflächengüte jeweils deutlich zunimmt Während die Glühdraht- und die Kriechstromfestigkeit konstant bleiben, weisen die erfindungsgemäße Formkörper nach Prüfnorm UL 94 bei 1,6 mm eine Einteilung in die höhere Brandschutzklasse V0 statt V2 auf.

## Patentansprüche

1. Schwer entflammbare Polyamidformmassen, dadurch gekennzeichnet, daß sie aus
A) von 5 bis 30 Gew.-% thermoplastischem, teilkristallinem Polyamid, ausgewählt aus Polyamid 6, Polyamid 66, Polyamid 46, Polyamid 610 oder teilkristallinem Copolyamid auf Basis dieser Polyamide oder Mischungen auf Basis der genannten Polyamide besteht.
B) von 10 bis 30Gew.-% thermoplastischem, teilkristallinem, teilaromatischem Copolyamid,
C) von 40 bis 60 Gew.-% Magnesiumhydroxid,
D) von 0 bis 25 Gew.-% Verstärkungsstoff und
E) von 0 bis 2 Gew.-% Verarbeitungsadditiven
bestehen.

2. Formmassen gemäß Anspruch 1, dadurch gekennzeichnet, daß sie von 10 bis 25 Gew.-% Polyamid A) enthalten.

3. Formmassen gemäß den Ansprüchen 1 bis 2, dadurch gekennzeichnet, daß sie von 15 bis 28 Gew.-% Copolyamid B) enthalten.

4. Formmassen gemäß den Ansprüchen 1 bis 3, dadurch gekennzeichnet, daß sie von 5 bis 23 Gew.-% Verstärkungsstoffe enthalten.

5. Formmassen nach den Ansprüchen 1 bis 4, dadurch gekennzeichnet, daß das teilaromatische, teilkristalline Copolyamid B) aus Isophthalsäure- und/oder Terephthalsäure-Hexamethylendiamin und Caprolactam besteht.

6. Formmassen nach den Ansprüchen 1 bis 5, dadurch gekennzeichnet, daß das teilaromatische Copolyamid B) aus Caprolactam, Isophthalsäure und Hexamethylendiamin besteht.

7. Formmassen nach den Ansprüchen 1 bis 6, dadurch gekennzeichnet, daß als Verstärkungsstoff D) Glasfasern, Kohlefasern, Mineralfasern oder Mischungen daraus verwendet werden.

8. Formmassen nach den Ansprüchen 1 bis 7, dadurch gekennzeichnet, daß als Verstärkungsstoff Glasfasern verwendet werden.

9. Verwendung der Formmassen gemäß den Ansprüchen 1 bis 8 zur Herstellung geformter Teile.

## Claims

1. Flame retardant polyamide moulding compositions, characterised in that they comprise
A) 5 to 30 wt.% of thermoplastic, partially crystalline polyamide, selected from polyamide 6, polyamide 66, polyamide 46, polyamide 610 or a partially crystalline copolyamide based on these polyamides or mixtures based on the said polyamides,
B) 10 to 30 wt.% of a thermoplastic, partially crystalline, partially aromatic copolyamide,
C) 40 to 60 wt.% of magnesium hydroxide,
D) 0 to 25 wt.% of reinforcing material,
E) 0 to 2 wt.% of processing additives.

2. Moulding compositions according to Claim 1, characterised in that they contain 10 to 25 wt.% of polyamide A).

3. Moulding compositions according to Claims 1 to 2, characterised in that they contain 15 to 28 wt.% of copolyamide B).

4. Moulding compositions according to Claims 1 to 3, characterised in that they contain 5 to 23 wt.% of reinforcing material.

5. Moulding compositions according to Claims 1 to 4, characterised in that partially aromatic, partially crystalline copolyamide B) comprises isophthalic acid and/or terephthalic acid / hexamethylene diamine and caprolactam.

6. Moulding compositions according to Claims 1 to 5, characterised in that partially aromatic copolyamide B) comprises caprolactam, isophthalic acid and hexamethylene diamine.

7. Moulding compositions according to Claims 1 to 6, characterised in that glass fibres, carbon fibres, mineral fibres or mixtures thereof are used as reinforcing material D).

8. Moulding compositions according to Claims 1 to 7, characterised in that glass fibres are used as a reinforcing material.

9. Use of moulding compositions according to Claims 1 to 8 for producing moulded articles.

## Revendications

1. Masses à mouler en polyamide difficilement inflammables, caractérisées en ce qu'elles consistent en
A) 5 à 30 % en masse de polyamide partiellement cristallin thermoplastique choisi parmi le polyamide 6, le polyamide 66, le polyamide 46, le polyamide 610 ou un copolyamide partiellement cristallin à base de ces polyamides ou des mélanges à base des polyamides cités,
B) 10 à 30 % en masse de copolyamide partiellement aromatique partiellement cristallin thermoplastique,
C) 40 à 60 % en masse d'hydroxyde de magnésium,
D) 0 à 25 % en masse de substance de renfort et
E) 0 à 2 % en masse d'additifs de mise en oeuvre.

2. Masses à mouler selon la revendication 1, caractérisées en ce qu'elles contiennent 10 à 25 % en masse de polyamide A).

3. Masses à mouler selon les revendications 1 à 2, caractérisées en ce qu'elles contiennent 15 à 28 % en masse de copolyamide B).

4. Masses à mouler selon les revendications 1 à 3, caractérisées en ce qu'elles contiennent 5 à 23 % en masse de substances de renfort.

5. Masses à mouler selon les revendications 1 à 4, caractérisées en ce que le copolyamide partiellement cristallin partiellement aromatique B) consiste en acide isophtalique- et/ou acide téréphtalique-hexaméthylènediamine et en caprolactame.

6. Masses à mouler selon les revendications 1 à 5, caractérisées en ce que le copolyamide partiellement aromatique B) consiste en caprolactame, acide isophtalique et hexaméthylènediamine.

7. Masses à mouler selon les revendications 1 à 6, caractérisées en ce que l'on utilise comme substance de renfort D) des fibres de verre, des fibres de carbone, des fibres minérales ou des mélanges de celles-ci.

8. Masses à mouler selon les revendications 1 à 7, caractérisées en ce que l'on utilise des fibres de verre comme substance de renfort.

9. Utilisation des masses à mouler selon les revendications 1 à 8 pour la fabrication de pièces moulées.
